# EUROPEAN PATENT APPLICATION

(11) **EP 3 506 570 A1**
(43) Date of publication of application: **03.07.2019**
(21) Application number: 17761331.2
(22) Date of filing: 03.08.2017
(51) Int. Cl.: H04L 12/58

(54) **METHOD AND SYSTEM FOR CONFIRMING THE COMMUNICATION OF ELECTRONIC MESSAGES**

(30) Priority: 25.08.2016 PT 11347
(71) Applicant: MREDIS, Lda, 4720-538 Amares (PT)
(72) Inventor: FERNANDES DE SÁ MACHADO, António Augusto, 4730-581 Prado (Santa Maria) (PT)
(74) Representative: do Nascimento Gomes, Rui
(86) International application number: PCT/IB2017/054763
(87) International publication number: WO 2018/037307

(57) **Abstract**

The present invention relates to the area of electronic communications, namely registered electronic communications, in which all addresses or identifiers of elements involved in the communication are registered, as well as their date and time of access, being this information available after the communication is done, for access. The present invention may be used for any type of digital mail for which registration is sought, as well as for the replacement of registered physical mail.

It is an object of the present invention a method of confirming electronic message communication, wherein a notification is sent to a second electronic address (111), under registration of an electronic message sent from a first electronic address (110). This communication also includes a register of all the elements involved in the communication (112). This makes it possible to verify the success of the communication and the information that the electronic message was received at the intention of a human user

## Description

### FIELD OF THE INVENTION

The present invention relates to the area of electronic communications, namely registered electronic communications, in which all addresses or identifiers of elements involved in the communication are registered, as well as their date and time of access, being this information available after the communication is done, for access.

These communications may be based on electronic mail, but they need specific registration functionalities and access to the transmitted data that can guarantee reliability and an accessible register after the electronic communication is done.

The present invention may be used for any type of digital mail for which a register is intended to serve as proof of delivery and receipt, as well as for the replacement of the registered physical mail.

The present invention solves the problem of disputes regarding the certainties or uncertainties of the delivery of electronic messages. And, to a greater advantage, it introduces the possibility that these electronic messages can be considered effectively valid for legal and judicial matters.

### BACKGROUND OF THE INVENTION

The present invention finds a closer background on computer platforms where the communication channel only exists between accounts opened on those same platforms and only unidirectionally.

Another of the major functionalities missing is the acceptance of the reception. That is, these platforms of the prior art actually carry out a transmission of the message from the sender to the receiver, ensuring that the delivery has been made, but do not present any moment where the receiver, prior to actual receipt of the message, expresses his will in receiving it, validating unambiguously the reception, and registering such information and presenting it automatically to the sender.

Thus, the known methods of the prior art do not allow an electronically accessible register to be made, not containing the possibility for any electronic mail user to send or receive registered messages and, in particular, that such messages are only validated as delivered after express acceptance of its reception by the receiver, a situation which, at present, is only possible by physical means.

### SUMMARY OF THE INVENTION

It is thus object of the present invention a method of confirming the communication of electronic messages that comprises the following steps:
- communicating a first electronic address to at least one server of an electronic message to be transmitted to a second electronic address, which in turn comprises the following steps:
   i. storage of the electronic message in a database of at least one server (110);
   ii. transmission of an electronic notification - distinct from the electronic message - to the second electronic address (111);
   iii. storage in said server of an electronic message transmission register and of the electronic notification from the first to the second electronic address (112), said transmission register preferably comprising:
      - the first electronic address
      - the second electronic address
      - a time stamp associated with step ii) and, preferably, date and time information associated with step i)
   and where the electronic notification includes:
   - information that there is a downloadable electronic message addressed to the second electronic address by the first electronic address;
   - reception/display information, being suitable for triggering the reception and/or display of the electronic message in a computing device by the action of a human user.

With the present invention it is intended to provide that an electronic message is sent from a first to a second electronic address, preferably electronic mail addresses. The method of the present invention enables the success of such communication to be identified via the first electronic mail address, by transmitting not the electronic message but a notification to the second electronic mail address. This notification only has information that the electronic message exists, that has been sent by the first electronic address and that is downloadable, including reception information and/or display of said message. Thus, the second electronic mail address is forced to select this option, enabling its registration, having all the information that allows it to make that decision. So, the present method is improved over those known in this technical area, as it not only enables the success of the communication to be identified - that the message was delivered - but also that it was intentionally and in fact received by the receiver. By storing a register of the transmission of the electronic message and of the electronic notification in a certified server, it is possible to access and prove the transmission of the message and of the notification, which allows a greater reliability in the communication between the first and the second electronic addresses.

Methods are known which allow for a solution close to this, these methods do not contain the possibility of storing the register, which leaves a human user accessing the first electronic address in doubt about the success of the message, and on what actions were actually performed by a human user of the second electronic mail address. On the other hand, this information is only unidirectional, not allowing a user with access to the second electronic address or even to third parties to check and access the communication register.

In an advantageous configuration of the method of the present invention the following options are provided computationally, under the action of a human user on the reception/display information:
a) reception and/or display of the electronic message via the second electronic address or
b) refusal to receive and/or display the electronic message via the second electronic address.

This is done by the preferred configuration of the general method described above, wherein a human user with access to the second electronic address - for whom another human user with access to the first address intends to send the registered electronic message - chooses to receive the message or not. Such information shall be registered, and therefore accessible.

In another preferred configuration of the method of the present invention, which results as a consequence of the action a) - of receiving and/or displaying the electronic message in a computing device by a human user -, a message of confirmation is sent to the first electronic address, including information that the electronic message has been received and/or displayed by a human user through the second electronic address.

This additional step following the communication consists of a link that closes the communication chain, informing a human user with access to the first electronic address that the electronic message has reached its destination and that the intention of its reception was given by a human user with access to the second electronic address.

In an advantageous configuration of the above described method, as a further consequence of action a), of receiving and/or displaying the electronic message in a computing device by a human user via the second electronic address, said transmission register is sent to the first and second electronic addresses, including additionally:
- information that the electronic message has been received and/or displayed by a human user through the second electronic address,
- a time stamp associated with said action a) and date and time information of the reception of the electronic notification at the second electronic address,
- the electronic message.

In this case, an automatic notification occurs in the first and in the second electronic addresses, not only that the communication was terminated with reception via the second address, but also through a "proof" of the entire communication, which consists of the communication register.

In an alternative configuration of the method of the present invention, as a consequence of action b):
- the access to the electronic message via the second electronic address is blocked immediately or after a finite period of time and
- a message is sent to the first electronic address informing the implementation of action b).

The access to the electronic message can be blocked immediately, not being possible its reception later on, or it can be blocked after a predefined period of time has elapsed. In this second case, it is possible to receive the electronic message later, even if it had initially been refused.

And, preferably, said transmission register is sent to the first electronic address after the blocking of the access to the electronic message, further including:
- information that the electronic message was refused by a human user through the second electronic address,
- the electronic message,
- a time stamp associated with said action b) and date and time information of the
reception of the electronic notification in the second electronic address and, preferably, the sending of said transmission register to the second electronic address after blocking the access to the electronic message, additionally including:
- information that the electronic message was refused by a human user through the second electronic address,
- a time stamp associated with said action b) and date and time information of the reception of the electronic notification in the second electronic address.

This is the method applicable to the case where a human user with access to the second electronic mail address refuses to receive the electronic message. There is also place here to the communication of the transmission register to the first and second electronic addresses being that, since the reception of the electronic message has been refused via the second address, the register sent to that second electronic address does not include it.

Also part of the present invention is a system that implements the method of the present invention in any of its described configurations, being that the said system contains:
- computing means of access to a first electronic address,
- computing means of access to a second electronic address and
- at least one server with a database,
both computing means and server being configured to implement the method of any one of the preceding claims, the computing means for accessing a second electronic address consisting of the computing device.

### DESCRIPTION OF THE FIGURES

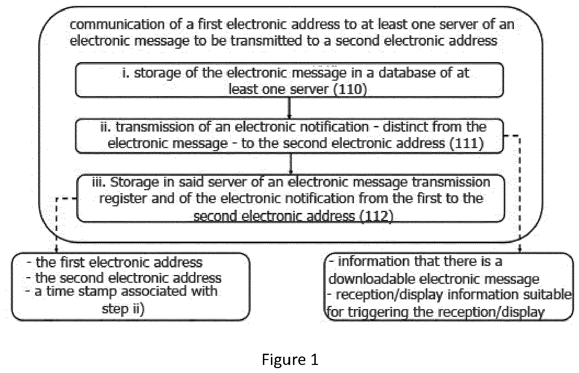

Figure 1 - representation of the method of the present invention in its most general form. This includes the communication of a first electronic address to at least one server of an electronic message to be transmitted to a second electronic address, which communication consists of three steps:
i. storage of the electronic message in a database of at least one server (110);
ii. transmission of an electronic notification - distinct from the electronic message - to the second electronic address (111);
iii. Storage in said server of an electronic message transmission register and of the electronic notification from the first to the second electronic address (112).

The electronic notification of step ii) contains at least information that there is a downloadable electronic message addressed to the second electronic address by the first electronic address and reception/ display information, being suitable to trigger the reception and/or display of the electronic message in a computing device by action of a human user and the transmission register contains at least three elements: the first electronic address, the second electronic address and a time stamp associated with step ii).

### DETAILED DESCRIPTION OF THE INVENTION

The more general and advantageous configurations of the present invention are described in the Summary of the invention. Such configurations are detailed below in accordance with other advantageous and/or preferred embodiments of implementation of the present invention.

In an advantageous configuration of the present invention, combinable with any of the previously described, keeping said electronic message in a database of at least one server is limited in time, for a finite period, being that if such period is exceeded without any of a) or b) actions is carried out from said transmission register to the first electronic address, after the blocking of the access to the electronic message, it includes additionally:
- information that the electronic message has not been received or refused via actions a) or b),
- the electronic message,
- a time stamp associated with the end of said finite period.

This allows incoming messages not received to be deleted from the server's database, thus saving space. On the other hand, it allows a follow-up of the communication by a human user of the first electronic address, which acknowledges that the electronic message was not obtained through the second electronic address within that period of time. This information is also registered and therefore accessible by any third party.

In another preferred embodiment of the method of the present invention, combinable with any of the previously described, the step i) - of recoding the electronic message in a database of at least one server - is deferred in time with respect to the communication of a first electronic address to at least one server of an electronic message to be transmitted. This may be useful if a user of the first electronic address does not want the electronic message - and consequently the electronic notification - to be sent immediately, thus allowing him to schedule it.

In another preferred configuration of the method of the present invention, combinable with any of the previously described, the first and second electronic addresses are electronic mail addresses and, preferably, the electronic message consists of an electronic mail message.

In yet another configuration of the method of the present invention, combinable with any of the foregoing, if the transmission register comprises the electronic message and if the latter contains an attachment, the transmission register additionally contains an identification of said attachment.

In yet another preferred configuration of the method of the present invention, the access to the computationally available options a) and b) is performed under:
- a single hyperlink,
- the computational presentation of a digital code or
- digital credentials registered in a database to which said server has access, and which include the second electronic address.

In yet another preferred configuration of the method of the present invention, combinable with any of the foregoing, it additionally comprises the access to a transmission register for third parties under web access via the unique credentials of a third party, said transmission register to third parties including the same information than the transmission register, except the electronic message.

Such a configuration allows validation of the veracity of the communication register by third parties.

In yet another preferred configuration of the method of the present invention, combinable with any of the foregoing, the communication of a first electronic address to at least one server of an electronic message to be transmitted to a second electronic address comprises the transmission of an electronic forwarding message of the first electronic address to a forwarding electronic address, which in turn forwards the electronic message addressed to the second electronic address to said server.

This makes possible that users with a registered first electronic mail address on a computer platform (including the said server) to use the registered communication without the need for access to that platform by means of associated digital credentials. This is made possible by the electronic forwarding address, which allows access without inserting the credentials to said registered communication.

In a preferred configuration of the system of the present invention, said computing means and server are electronically connected through a communications network, preferably including the Internet.

### EMBODIMENTS

The implementation of the method of the present invention will now be described through the detailed description of one embodiment.

As will be apparent to one skilled in the art, the present invention should not be limited to the detailed configurations and embodiments described herein, with various modifications being possible within the scope of the present invention. The method is described in further detail herein with respect to the above description, including, for example, registration steps of a user on a computing platform.

The process begins with the opening of an account by the user. For this he will have to have a valid electronic mail address - the first electronic mail address - on a computing platform, which includes the said server with at least one database. Once he has an account, it is possible to send messages using the platform.

The platform comprises a menu called "composition of messages" where it is possible to compose a message, to attach files and to place the receiver, the second electronic address.

Before sending any electronic message it is possible to decide on:
- whether the electronic message is sent immediately or if the sending is deferred in time;
- whether the electronic message is delivered immediately or deferred in time;
- what is the period of time during which the electronic message is accessible by the second electronic address.

At the time of sending, is done a summary of the sending settings that is shown to the user for validation or change if justified.

At the moment the user of the first electronic address sends the message it begins the process of keeping the transmission register that will have as a first entry the moment of creation of the message.

At this point an electronic mail notification is sent to the receiver - the second address - to be alerted that someone has sent him a registered message.

The receiver may be registered on the platform or not.

When he receives an email with the notification, he will have in the body of this email a button that forwards him to the message, as well as a "pin" that will allow him to access the message if he is not registered on the platform.

If the user is not a registered user on the platform and accesses via pin, a subsequent account register associated with said email - the second electronic address - will allow access to previously received electronic messages associated with that same email.

After accessing the message (by his own login or by the "pin" in his possession), the receiver can only see that there is in fact a message for him and who is the sender of this message (just like in the physical mail), but he will not have any more information. Neither the subject of the message will be made available as long as the receiver does not express his will to receive it.

At that moment the receiver will also have access to the buttons that allow him to express this will, that of "accepting" and that of "refusing".

If the receiver chooses to accept, the entire message is made available, including its attachments, if any, and simultaneously that acceptance is registered in the "log" or register, which is also sent to the sender of the message.

If the receiver chooses to refuse, he will see nothing, and the message will be blocked, informing the sender of the receiver's refusal to receive the message.

However, for a short period of time, is given the possibility to the receiver of reversing his refusal and accept the message. If this happens, a new register will be made with the status update and this information will be sent to the sender, simultaneously with the message being made available to the receiver.

If the receiver does not take any of the actions that are within his disposal (accept or refuse the message), the message will remain in his inbox for the entire validity period (pre-set at the time of sending). As soon as the message validity expires, the message will be deleted and a register will again be recorded and sent back to the sender saying that there was no action by the receiver, i.e. the message was ignored.

At the end of the process both the sender and the receiver can display or download the complete message register where the entire message transmission process will be presented, as well as the body of the text of the message and also the identification of the attachments contained therein, if this is the case ("log").

In this "log" or register, it will also be present a link and a pin that will give a third party (for example a court), to whom the registration is delivered, the possibility of validating if the "log" in his presence is true and was not adulterated subsequently, by the online display of this same log, where a final temporal stamp is included proving its immutability.

## Claims

1. A method of confirming the communication of electronic messages **characterized in that it** comprises the following steps:
- communicating a first electronic address to at least one server of an electronic message to be transmitted to a second electronic address, which in turn comprises the following steps:
i. storage of the electronic message in a database of at least one server (110);
ii. transmission of an electronic notification - distinct from the electronic message - to the second electronic address (111);
iii. storage in said server of an electronic message transmission register and of the electronic notification from the first to the second electronic address (112), said transmission register preferably comprising:
• the first electronic address
• the second electronic address
• a time stamp associated with step ii) and, preferably, date and time information associated with step i)
and where the electronic notification includes:
• information that there is a downloadable electronic message addressed to the second electronic address by the first electronic address;
• reception/display information, being suitable for triggering the reception and/or display of the electronic message in a computing device by the action of a human user.

2. A method according to the preceding claim wherein, under the action of a human user on the reception/display information, an option is made available between:
a) reception and/or display of the electronic message via the second electronic address or
b) refusal to receive and/or display the electronic message via the second electronic address.

3. A method according to the preceding claim wherein, as a consequence of the action a), of receiving and/or displaying the electronic message in a computing device by a human user and via the second electronic address, a message of confirmation is sent to the first electronic address, including information that the electronic message has been received and/or displayed by a human user through the second electronic address.

4. A method according to the preceding claim wherein, as a further consequence of action a), of receiving and/or displaying the electronic message in a computing device by a human user via the second electronic address, said transmission register is sent to the first and second electronic addresses, including additionally:
- information that the electronic message has been received and/or displayed by a human user through the second electronic address,
- a time stamp associated with said action a) and date and time information of the reception of the electronic notification at the second electronic address,
- the electronic message.

5. A method according to claim 2 wherein, as a consequence of action b):
- the access to the electronic message via the second electronic address is blocked immediately or after a finite period of time and
- a message is sent to the first electronic address informing the implementation of action b).

6. A method according to the preceding claim, wherein it additionally contains the sending of said transmission register to the first electronic address, after the blocking of the access to the electronic message, including additionally:
- information that the electronic message was refused by a human user through the second electronic address,
- the electronic message,
- a time stamp associated with said action b) and date and time information of the
reception of the electronic notification in the second electronic address and, preferably, the sending of said transmission register to the second electronic address after blocking the access to the electronic message, additionally including:
- information that the electronic message was refused by a human user through the second electronic address,
- a time stamp associated with said action b) and date and time information of the reception of the electronic notification in the second electronic address.

7. A method according to any one of claims 2-6, wherein keeping said electronic message in a database of at least one server is limited in time, for a finite period, being that if such period is exceeded without any of a) or b) actions is carried out from said transmission register to the first electronic address, after the blocking of access to the electronic message, it includes additionally:
- information that the electronic message has not been received or refused via actions a) or b),
- the electronic message,
- a time stamp associated with the end of said finite period.

8. A method according to any one of the preceding claims, wherein step i) of storing the electronic message in a database of at least one server is deferred in time with respect to the communication of a first electronic address to at least one server of an electronic message to be transmitted.

9. A method according to any one of the preceding claims, wherein the first and second electronic addresses are electronic mail addresses and the electronic message consists of an electronic mail message.

10. A method according to the preceding claim, wherein if the transmission register comprises the electronic message and if the latter contains an attachment, the transmission register additionally contains an identification of said attachment.

11. A method according to any one of the preceding claims, wherein the access to the computationally available options a) and b) is performed under:
- a single hyperlink,
- the computational presentation of a digital code or
- digital credentials registered in a database to which said server has access, and which include the second electronic address.

12. A method according to any one of the preceding claims, wherein it additionally comprises the access to a transmission register for third parties under web access via the unique credentials of a third party, said transmission register to third parties including the same information than the transmission register, except the electronic message.

13. A method according to any one of the preceding claims, wherein the communication of a first electronic address to at least one server of an electronic message to be transmitted to a second electronic address comprises the transmission of an electronic forwarding message of the first electronic address to a forwarding electronic address, which in turn forwards the electronic message addressed to the second electronic address to said server.

14. A system for confirming the communication of electronic messages **characterized in that it** comprises:
- computing means of access to a first electronic address,
- computing means of access to a second electronic address and
- at least one server with a database,
both computing means and server being configured to implement the method of any one of the preceding claims, the computing means for accessing a second electronic address consisting of the computing device suitable for triggering the reception and/or display of the electronic message.

15. A system according to the preceding claim, wherein said computing means and server are electronically connected via a communications network, preferably including the Internet.
